# EUROPÄISCHE PATENTANMELDUNG

(11) **EP 0 965 297 A1**
(43) Veröffentlichungstag der Anmeldung: **22.12.1999**
(21) Anmeldenummer: 98111388.9
(22) Anmeldetag: 20.06.1998
(51) Int. Cl.: A47G 21/06, A47J 43/28, A47J 19/04

(54) **Garnitur von verschiedenen Küchenarbeitsgeräten**

(71) Anmelder: LEIFHEIT Aktiengesellschaft, D-56377 Nassau (DE)
(72) Erfinder: Brand, Dieter, 56132 Dausenau (DE)

(57) **Zusammenfassung**

Garnitur von unterschiedlichen Küchenarbeitsgeräten 3,4,5,6,7 mit jeweils einem Griff- 8 und einem Funktionsbereich 9, wobei der Griffbereich 8 der einzelnen Küchenarbeitsgeräte 3 bis 7 konturengleich ausgeführt wird und ein Halter 15 zur Fixierung derselben in gestapeltem bzw. aufgereihtem Zustand vorgesehen ist.

## Beschreibung

Die Erfindung bezieht sich auf eine Garnitur von verschiedenen Küchenarbeitsgeräten gemäß dem Oberbegriff des Patentanspruchs 1.

Diese Garnituren werden heute in der vielfältigsten Form angeboten. Teilweise bestehen sie ganz aus Kunststoff, teilweise ganz aus Stahl bzw. Edelstahl und teilweise sind Stahlfunktionsbereiche mit Griffbereiche aus Kunststoff oder Holz kombiniert. Diese Küchenarbeitsgeräte werden sehr häufig als Garnitur mit einer Halteleiste zur Befestigung an einer Wand, einer Küchenfront oder einer Schranktür angeboten. Es sind auch Ausführungen bekannt, die in kistenartigen Behältern mit Formeinsätzen die Küchenarbeitsgeräte aufnehmen. Eine weitere Alternative ist die lose Aufnahme in Küchenschubladen.

Aufgabe der Erfindung ist es, eine Garnitur von verschiedenen Küchenarbeitsgeräten bereitzustellen, die eine kompakte Aufbewahrung mit geringsten Mitteln ermöglicht, und bei der dennoch eine einfache Handhabung und ein schneller Zugriff gewährleistet bleibt.

Diese Aufgabe wird mit den kennzeichnenden Merkmalen des Anspruchs 1 gelöst.

Damit wird mit geringen Mitteln, insbesondere ohne den ästhetischen Gesamteindruck zu zerstören, die Möglichkeit geschaffen, die Küchenarbeitsgeräte auf kleinstem Raum unterzubringen. Zusätzlich hat die konturengleiche Ausführung des Griffbereiches, insbesondere wenn eine konkave Form gewählt wird, obwohl es auf den ersten Blick außergewöhnlich wirkt, ergonomische Vorteile. Die Ausführung des Halters kann dabei in weiten Bereichen frei gewählt werden. Er kann sowohl als Federklammer, ausgeführt in Stahl oder Kunststoff als auch als dekoratives Standteil sowie als Aufhängeteil zur Befestigung an einer Wand ausgebildet werden.

Weitere Ausgestaltungen der Erfindung sind den Unteransprüchen zu entnehmen. So ist es natürlich besonders vorteilhaft, ein KüchenarbOeitsgerät selbst als Halter auszubilden. Dadurch wird ohne jegliches Zusatzteil, lediglich durch geringfügige Anpassung des Funktionsbereiches eine optisch ansprechende Lösung geschaffen. Dabei kann sowohl ein Kartoffelstampfer, wie er im nördlichen Bereich Europas zum Standardteil gehört als auch ein für südliche Länder besser geeigneter Spaghettilöffel genutzt werden. Natürlich ist es dabei möglich, durch mehrere Stege die Küchenarbeitsgeräte voneinander zu separieren und/oder als auch diese durch Rastvorsprünge und Auflagen sowie im Übergangsbereich zwischen Griff- und Funktionsbereich vorgesehene Klammerspangen zusätzlich zu sichern.

Einige Ausführungsbeispiele der Erfindung werden im folgenden anhand der Zeichnungen näher erläutert:
- Figur 1: ein erstes Ausführungsbeispiel mit einem Kartoffelstampfer als Halter,
- Figur 2: ein Ausführungsbeispiel mit einem Kartoffelstampfer als Halter und nebeneinander angeordneten Küchenarbeitsgeräten,
- Figur 3: eine Draufsicht auf das Ausführungsbeispiel gemäß Figur 2 und

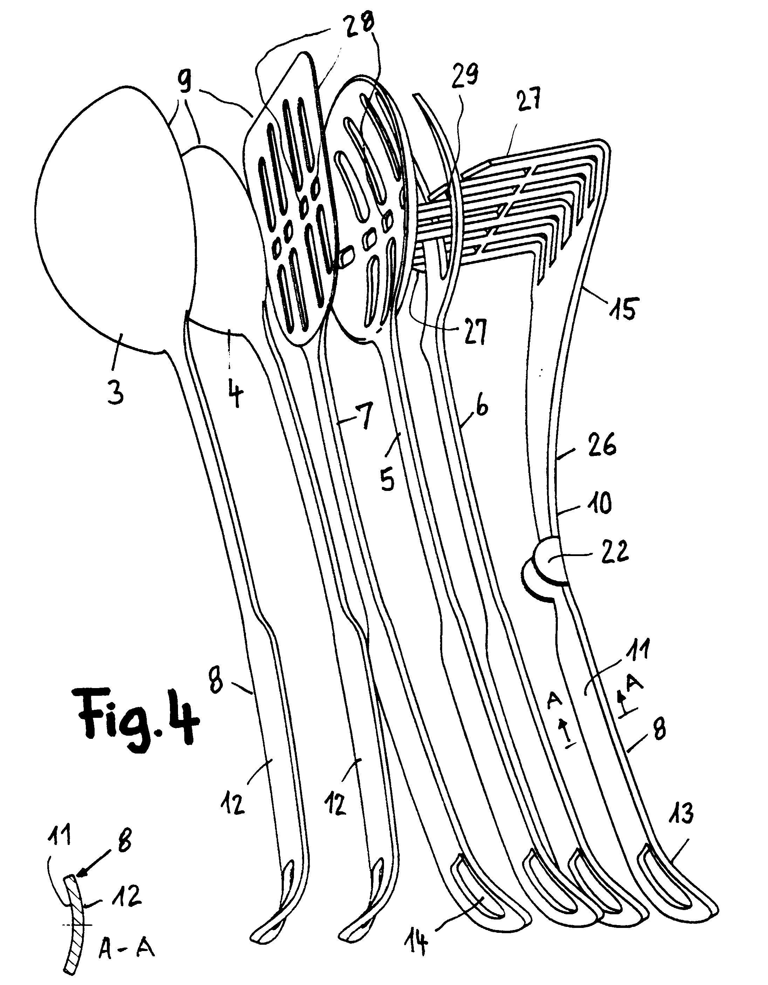

- Figur 4: ein weiteres Ausführungsbeispiel.

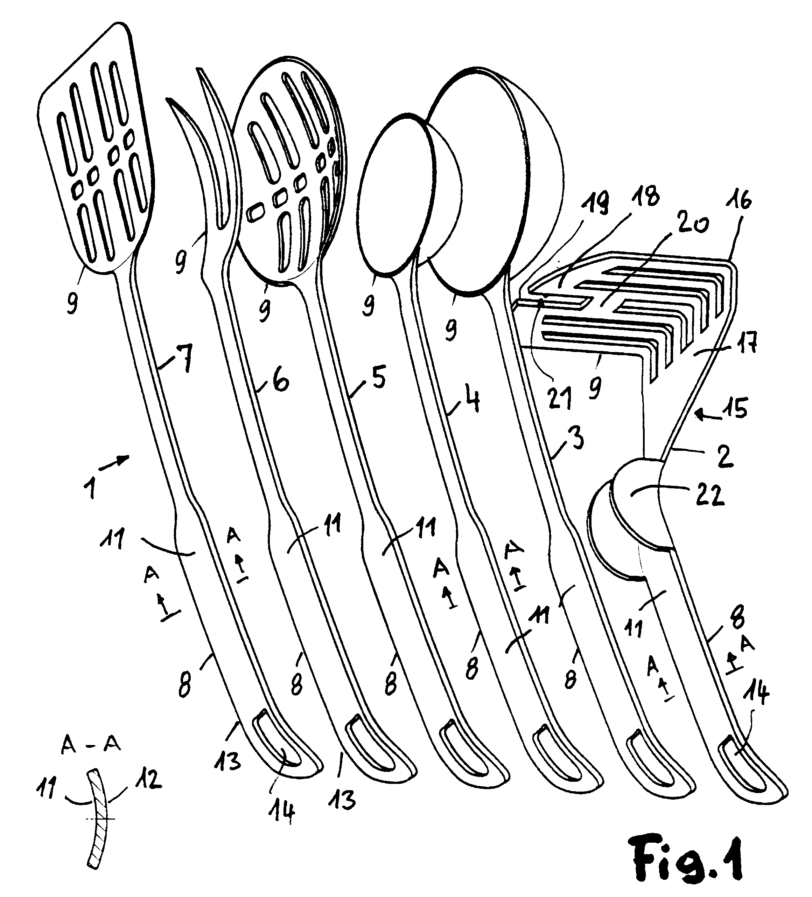

In Figur 1 ist eine Garnitur 1 von Küchenarbeitsgeräten, üblicherweise als Löffelset bezeichnet, bestehend aus einem Kartoffelstampfer 2, einem großen Schöpflöffel 3, einem kleinen Schöpflöffel 4, einem Schaumlöffel 5, einer Fleischgabel 6 und einem Wender 7 dargestellt.

Jedes Küchenarbeitsgerät besteht aus einem Griffbereich 8 und einem Funktionsbereich 9. Die Griffbereiche 8 der einzelnen Küchenarbeitsgeräte 2 bis 7 sind konturengleich ausgebildet. Der Griffbereich ist gegenüber den ihn mit dem Funktionsbereich verbindenden Stiel breiter ausgeführt und nach unten gewölbt. Dabei entspricht die Wölbung etwa der Kontur einer Daumenkuppe, wodurch der Griffbereich 8 sehr arbeitsfreundlich in der Hand ruht. Der Daumen ruht dabei, gleichgültig ob Rechts- oder Linkshänder, in der Wölbung 11, während die Fingerkuppen die Unterseite 12 umgreifen. Am Ende 13 ist der Griffbereich 8 nach unten weggebogen und mit einer Öffnung 14 versehen.

Der Kartoffelstampfer 2 ist als Halter 15 für die Küchenarbeitsgeräte 3 bis 7 ausgebildet. Dabei entspricht der Griffbereich 8 den anderen Griffbereichen der Küchenarbeitsgeräte 3 bis 7. Der Funktionsbereich des Kartoffelstampfers 2 bildet den Haltebereich 16. Er besteht aus dem Basisbereich 17 und zumindest zwei zu diesem etwa senkrecht stehenden Stege 18 und 19. Die Stege 18 und 19 sind durch eine Auflage 20 miteinander verbunden. Zur Verrastung der Küchenarbeitsgeräte 3 bis 7 sind zwei Rastvorsprünge 21 an den Stegen 18 und 19 angeformt.

Um auch den Griffbereich 8 der Küchenarbeitsgeräte 3-7 besser zu fixieren, können am Halter 15 zwei Klammerspangen 22 zur Umfassung der Stiele vorgesehen werden und/oder der Griffbereich des Kartoffelstampfers ist stärker U-förmig ausgeführt, was dessen Handhabung nicht negativ beeinflußt eher verbessert.

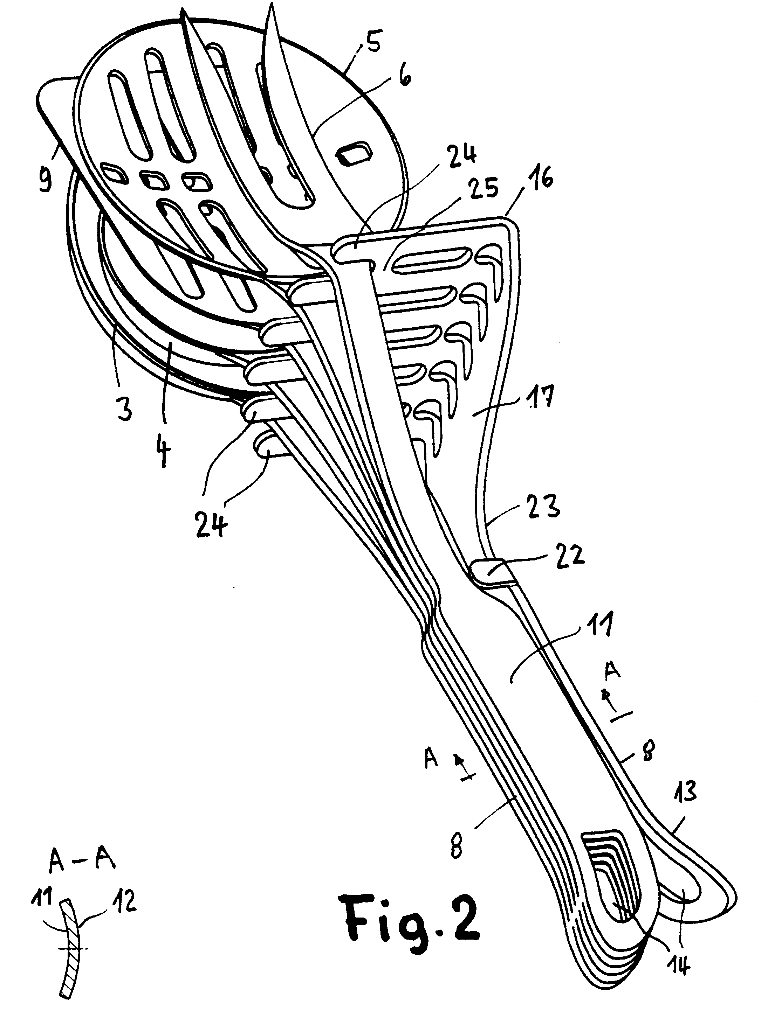

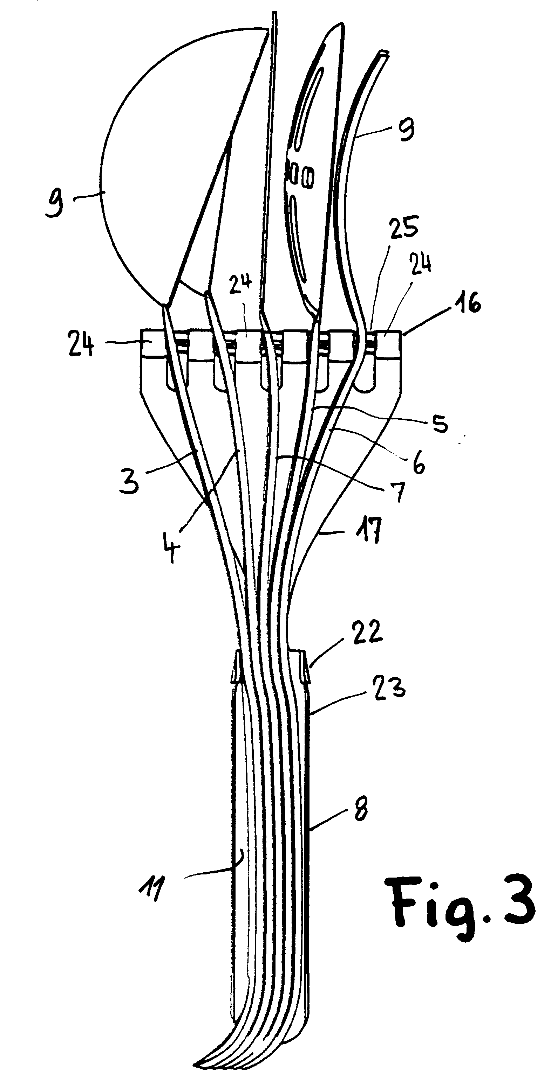

Während nach dem Ausführungsbeispiel gemäß Figur 1 die Küchenarbeitsgeräte 3 bis 7 zur Aufbewahrung übereinander gestapelt werden, werden die Küchenarbeitsgeräte 3 bis 7 gemäß dem Ausführungsbeispiel nach Figur 2 und 3 nebeneinander gestapelt, d.h. aufgereiht. Dazu ist der Kartoffelstampfer 23 im Haltebereich 16 mit feingliedrigen Stegen 24 versehen, die jeweils mit einer Auflage 25 verbunden sind und einzeln die Küchenarbeitsgeräte 3 bis 7 senkrecht aufnehmen. Der Basisbereich 17 des Kartoffelstampfers 23 kann auch hier wieder mit zwei Klammerspangen 22 versehen sein und/oder stärker U-förmig ausgebildet werden.

Nach den Ausführungsbeispielen Figur 1 bis 3 ist der Halter 15 als Kartoffelstampfer ausgebildet. Natürlich ist es auch möglich, den Griffbereich an diesem Halter 15 wegzulassen und ihn als Wandhalter auszubilden.

Nach dem Ausführungsbeispiel 4 ist wiederum ein Kartoffelstampfer 26 als Halter 15 ausgebildet. Dabei greifen halbkreisförmig abgestufte Stege 27 in Durchbrechungen 28 der Küchenarbeitsgeräte 5 und 7 ein. Die Fleischgabel 6 ist dabei mit Positioniernoppen 29 anstelle der Durchbrechungen 28 versehen. Die Schöpflöffel 4 und 3 werden bei dieser Art der Halterung gewendet, so daß sie in Formschluß mit den halbkreisförmig abgestuften Stegen 27 kommen.

Es ist auch hier wieder möglich, den Stiel 10 des Kartoffelstampfers 26 mit Klammerspangen 22 zur Aufnahme der Küchenarbeitsgeräte 3 bis 7 zu versehen. Das Ausführungsbeispiel 4 hat den Vorteil, daß der Kartoffelstampfer 26 in etwa die gleiche Länge wie die restlichen Küchenarbeitsgeräte 3 bis 7 haben kann.

Natürlich kann, wenn es die Verbrauchergewohnheiten erfordern, der Kartoffelstampfer 2, 23 und 26 durch einen entsprechend ausgebildeten Spaghettilöffel ersetzt werden.

Ebenso ist es möglich, die Klammerspangen 22 direkt aus dem Metall des Halters 15 auszuformen als auch als separates Teil, sowohl aus Kunststoff als auch aus Metall, beizufügen.

## Patentansprüche

1. Garnitur (1) von verschiedenen Küchenarbeitsgeräten, wie z.B. Schöpflöffel (3,4), Schaumlöffel (5), Wender (7), Fleischgabel (6), mit jeweils einem Griff- und einem Funktionsbereich, dadurch gekennzeichnet, daß der Griffbereich (8) der einzelnen Küchenarbeitsgeräte (2, 23, 26, 3-7) konturengleich ausgeführt und ein Halter (15) zur Fixierung derselben in gestapeltem bzw. aufgereihtem Zustand vorgesehen ist.

2. Garnitur von verschiedenen Küchenarbeitsgeräten nach Anspruch 1, dadurch gekennzeichnet, daß der Haltebereich (16) des Halters (15) durch zumindest zwei etwa senkrecht zum Basisbereich (17) stehende, federnde Stege (18, 19, 24, 27) gebildet ist.

3. Garnitur von verschiedenen Küchenarbeitsgeräten nach Anspruch 2, dadurch gekennzeichnet, daß die Stege (18, 19, 24, 27) mit Auflage- (20) und/oder Rastvorsprüngen (21) versehen sind.

4. Garnitur von verschiedenen Küchenarbeitsgeräten nach einem der Ansprüche 1 bis 3, dadurch gekennzeichnet, daß der Halter (15) durch ein Küchenarbeitsgerät (2, 23, 26) gebildet ist, wobei der Haltebereich (16) in den Funktionsbereich (9) eingearbeitet und der Griffbereich (8) mit den Griffbereichen (8) der einzelnen Küchenarbeitsgeräte (3-7) zur Stapelung bzw. Aufreihung konturengleich ausgebildet ist.

5. Garnitur von verschiedenen Küchenarbeitsgeräten nach Anspruch 4, dadurch gekennzeichnet, daß der Haltebereich (16) aus der der Anzahl der aufzunehmenden Küchenarbeitsgeräte plus eins entsprechenden Anzahl Stege zur Einzelaufnahme der aneinanderzureihenden Küchenarbeitsgeräte besteht.

6. Garnitur von verschiedenen Küchenarbeitsgeräten nach Anspruch 5, dadurch gekennzeichnet, daß die Küchenarbeitsgeräte (3-7) stehend aufgenommen sind.

7. Garnitur von verschiedenen Küchenarbeitsgeräten nach Anspruch 2 bis 4, dadurch gekennzeichnet, daß im Griffbereich (8) und soweit sinnvoll im Funktionsbereich (9) eine Durchbrechung (14, 28) vorgesehen ist, und daß zumindest ein Steg (24, 27) zur Fixierung diese durchdringt.

8. Garnitur von verschiedenen Küchenarbeitsgeräten nach Anspruch 4 bis 7, dadurch gekennzeichnet, daß am Griffbereich (8) des den Halter (15) bildenden Küchenarbeitsgerätes (2, 23, 26) zwei die Griffbereiche (8) der anderen Küchenarbeitsgeräte (3-7) haltende Klammerspangen (22) vorgesehen sind.

9. Garnitur von verschiedenen Küchenarbeitsgeräten nach einem der Ansprüche 4 bis 8, dadurch gekennzeichnet, daß das den Halter (15) bildende Küchenarbeitsgerät (2) ein Kartoffelstampfer (2, 23, 26) ist.

10. Garnitur von verschiedenen Küchenarbeitsgeräten nach einem der Ansprüche 4 bis 8, dadurch gekennzeichnet, daß das den Halter (15) bildende Küchenarbeitsgerät ein Spaghettilöffel ist.
